# FASCICULE DE BREVET EUROPEEN

(11) **EP 3 066 367 B1**
(45) Date de publication et mention de la délivrance du brevet: **22.11.2017**
(21) Numéro de dépôt: 14786226.2
(22) Date de dépôt: 22.09.2014
(51) Int. Cl.: F16H 61/16, F16H 61/682

(54) **DISPOSITIF ET PROCEDE DE CONTROLE D'UNE TRANSMISSION AUTOMATIQUE EN SITUATION DE VIRAGE**
VORRICHTUNG UND VERFAHREN ZUR STEUERUNG EINES AUTOMATIKGETRIEBES BEI KURVENFAHRT
DEVICE AND METHOD FOR CONTROLLING AN AUTOMATIC TRANSMISSION DURING CORNERING

(30) Priorité: 08.11.2013 FR 1360935
(43) Date de publication de la demande: 14.09.2016
(73) Titulaire: Renault S.A.S., 92100 Boulogne-Billancourt (FR)
(72) Inventeur: RIESENMEY, Fabrice, F-91780 Chalo Saint Mars (FR); LOPES, Sergio, F-77930 Perthes (FR); POUJOL, Ivan, F-91470 Limours (FR)
(86) Numéro de dépôt international: PCT/FR2014/052344
(87) Numéro de publication internationale: WO 2015/067862

(56) Documents cités:
- EP-A1- 0 965 777
- EP-A1- 1 028 241
- EP-A2- 1 462 682
- JP-A- S61 262 259
- US-A- 5 873 802

## Description

La présente invention concerne la commande des transmissions automatiques ou automatisées de véhicule.

Plus précisément, elle a pour objet un procédé de contrôle d'une transmission automatique de véhicule en situation de virage. De tels procédés sont divulgués dans les documents US 5 873 802 et EP 1 462 682. Cette invention trouve une application privilégiée, mais non limitative, sur un véhicule motorisé, à deux trois ou quatre roues, équipé d'un réducteur ou d'une transmission à commande automatisée, dans laquelle la liaison entre l'interface, ou sélecteur de vitesses pris en main par le conducteur et le système de contrôle de la transmission est de type *« shift by wire ».* Les déplacements imposés à l'interface par le conducteur, sont alors codés électriquement par l'interface. Les signaux codés transitent par un réseau filaire ou multiplexé ou un autre support de communication, optique, télémétrique, etc.., jusqu'au système de contrôle de la transmission, où ils sont décodés et exploités par son unité de calcul.

Certaines commandes de vitesses de réducteurs automatisés, ne sont pas dotées de moyens interdisant la sélection de la position neutre (point mort) sans action positive de déverrouillage du conducteur sur un système d'interdiction mécanique ou électromécanique. Cette position peut alors être sélectionnée par erreur par le conducteur ou par le système de commande lui-même. Si cet incident se produit en ligne droite, ou en courbe à faible vitesse, il n'y a pas d'impact immédiat sur la tenue de route du véhicule. En revanche, si cette manoeuvre est exécutée lors de la négociation d'un virage serré, à haute vitesse et sous fort couple moteur, l'ouverture brutale de la transmission peut générer, dans le pire des cas, une sortie de route. Ce désagrément est d'autant plus fort, que le coefficient d'adhérence du sol ou du pneumatique est faible. Son importance dépend directement de l'intensité de l'accélération transversale du véhicule lors de l'incident.

Lorsque le système organisant la liaison entre le conducteur et le contrôle du réducteur est de type « shift by wire », c'est-à-dire électrique, aucune liaison mécanique n'existe entre le sélecteur manipulé par le conducteur et la transmission elle-même. Les informations décodant la volonté du conducteur sur la commande de la transmission sont transcrites en signaux, à destination de l'unité de contrôle de la transmission. Ces informations transitent généralement par un réseau filaire ou multiplexé, ou encore un support optique, télémétrique, etc. La position du sélecteur ou levier de vitesses dont dispose le conducteur sur son poste de conduit parvient à l'unité de contrôle de la transmission, et autorise, après un arbitrage, l'application d'une logique de commande d'actionneurs électriques ou électro hydrauliques. Cette logique est normalement en rapport avec le sens du mouvement, le stationnement du véhicule, ou le rapport de boîte approprié.

En l'absence de moyens d'interdiction, la position neutre peut donc être sélectionnée, par erreur ou non, alors que la chaine cinématique est sous couple. Elle peut alors imposer une ouverture de la transmission, c'est à dire de la chaîne cinématique de celle-ci, dans des conditions de sécurité insuffisantes, notamment en courbe à vitesse élevée. Dès lors, l'ouverture brutale de la transmission risque d'entrainer une perte de contrôle du véhicule en raison de la force centrifuge, notamment lorsque le coefficient d'adhérence du sol ou des pneumatiques est faible.

La présente invention concerne le problème particulier de l'ouverture accidentelle d'une chaîne cinématique à haute vitesse en courbe, notamment en situation de risque d'une perte de contrôle du véhicule, lié à un transfert rapide et inattendu de charge dans la chaîne cinématique du véhicule.

Elle vise à éviter l'ouverture inopinée de sa chaîne cinématique dans ces conditions particulières.

Dans ce but, elle propose que l'ouverture de la transmission en réponse au déplacement d'une interface de commande dont les informations de position sont transmises à l'unité de calcul de la transmission par un réseau de communication du véhicule, soit contrôlée sur la base d'une comparaison d'une valeur d'accélération transversale mesurée ou prédite du véhicule avec un seuil d'accélération transversale calibré en fonction du rayon de courbure des virages abordés ou identifiés, et de la vitesse et de l'accélération longitudinale du véhicule sur ces derniers.

Selon un mode de réalisation particulier de l'invention, l'ouverture de la transmission est interdite lorsque l'accélération transversale mesurée du véhicule est supérieure au seuil calibré.

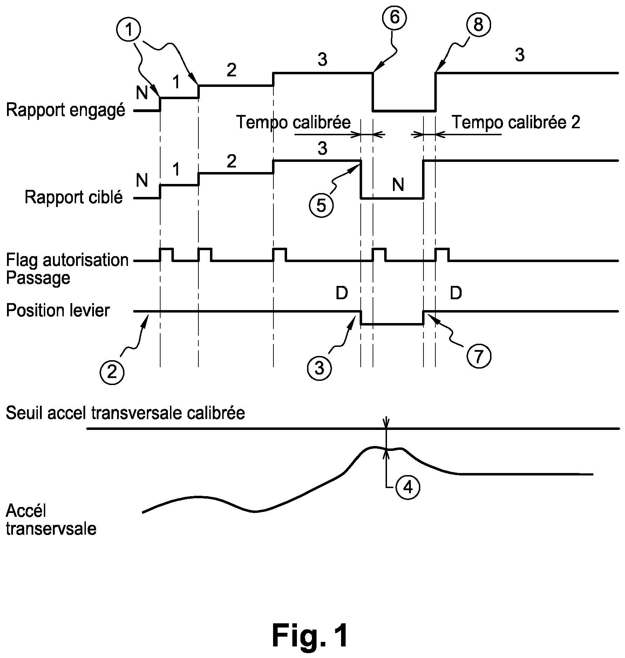

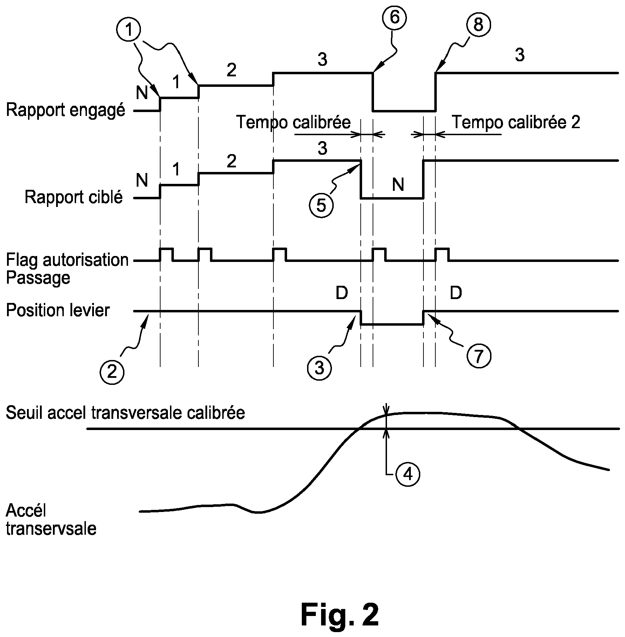

La présente invention sera mieux comprise à la lecture de la description non limitative d'un mode de réalisation non limitatif de celle-ci, en se reportant aux dessins annexés, sur lesquels les figures 1 et 2 illustrent respectivement un cas de demande de Neutre accidentel accepté et refusé par le contrôle.

La solution proposée repose sur l'exploitation, dans une logique de contrôle spécifique, d'une information élaborée principalement à partir de l'accélération transversale du véhicule. Cette information conditionne, après arbitrage, l'ouverture ou non de la chaine cinématique. La situation visée est un déplacement accidentel du levier de commande vers la position « neutre », alors que le véhicule est, ou est destiné, à très court terme, à être, soumis à une force centrifuge élevée.

L'intensité de la force centrifuge étant directement liée à la vitesse de déplacement du véhicule et au rayon de courbe emprunté, l'invention repose sur la détection d'un seuil d'accélération transversale, au-delà duquel l'unité de contrôle de la transmission refuse de quitter le rapport engagé et de s'ouvrir en passant sur la position neutre, ou de point mort. En revanche, elle laisse la possibilité au conducteur de passer au Neutre en ligne droite, sur des courbes très légères, ou même sur des courbes plus fortes, mais à faible vitesse. Le contrôle introduit dans la commande de la transmission répond donc en premier lieu à un objectif de sécurité sur route, en réponse à une action accidentelle, mais aussi à une action volontaire du conducteur sur son sélecteur. Elle trouve également sa justification dans le cadre d'opérations de maintenance ou de diagnostic du véhicule, dès lors qu'un opérateur pourrait déclencher cette manoeuvre par inadvertance.

Lorsque le sélecteur de vitesse électrique est composé d'un socle sur lequel s'articule un levier, son déplacement angulaire s'inscrit dans les directions axiale (X) transversale (Y) ou verticale (Z) du véhicule. Les sollicitations de commande du réducteur sont matérialisées par les positions habituelles « Park » pour parking ; « Reverse » pour marche arrière ; « Neutral », ou neutre, pour point mort ; « Drive » pour marche avant ; un mode manuel impulsionnel permet parfois de passer les rapports supérieurs ou inférieurs, sur décision du conducteur. Toutes les positions peuvent être marquées et indexées par un système de billage permettant la sélection de la bonne position et le maintien du levier dans celle-ci. Un système de verrouillage électro mécanique assure le plus souvent un blocage du sélecteur en mode Park, mais la position neutre en est généralement dépourvue.

Chaque position est repérée, et identifiée par des capteurs, dont les informations sont codées sous format numérique ou analogique puis transmises au calculateur du levier ou au calculateur de la transmission ; le codage de ces positions est en rapport direct avec la volonté du conducteur ainsi que le contrôle des rapports de vitesses engagés. Les algorithmes gérant les autorisations de démarrage, de passage en « Reverse », ou « Park », et d'autorisation de passages montants ou descendants, calculent en temps réels la cohérence entre la demande de changement de position du levier et l'état de la transmission. Certaines demandes peuvent ainsi être réalisées ou refusées pour des motifs de bilan énergétique, de sécurité, de prestation, etc. Si le conducteur garde la possibilité de sélectionner la position Neutre en toute circonstance, notamment en situation de virage, la sécurité de la trajectoire peut ne plus être assurée pour les raisons indiquées plus haut, notamment si la liaison entre le sélecteur et la transmission est électrique.

De manière générale, l'invention prévoit que l'ouverture de la transmission, c'est-à-dire de la chaîne cinématique de celle-ci, en réponse au déplacement d'une interface de commande dont les informations de position sont transmises à l'unité de calcul de la transmission par un réseau de communication du véhicule, soit contrôlée sur la base d'une comparaison d'une valeur d'accélération transversale mesurée, ou prédite, du véhicule, avec un seuil d'accélération transversale calibré en fonction du rayon de courbure des virages abordés ou identifiés et de la vitesse et de l'accélération longitudinale sur ces derniers. L'ouverture de la transmission peut alors être interdite, si l'accélération transversale mesurée est supérieure au seuil calibré.

Les schémas montrent sur un exemple, l'évolution simultanée dans le temps du rapport engagé, d'un rapport ciblé, avec le positionnement des « flags » d'autorisation de passage, ainsi que les changements de position du levier, et la variation de l'accélération transversale. Le seuil d'accélération transversale est stable sur la période. Sur la figure 1 (cas d'une demande de Neutre accidentel ou volontaire accepté par le contrôle), les repères 1 à 8 indiquent respectivement :
1) les montées de rapports de vitesse,
2) le positionnement initial du sélecteur de vitesse sur « Drive »,
3) le déplacement du sélecteur de vitesse sur « Neutre »
4) un pic d'accélération transversale inférieur au seuil d'accélération transversale calibré,
5) le passage au « Neutre »,
6) l'ouverture de la transmission après une temporisation calibrée,
7) le retour sélecteur sur « Drive »,
8) le retour de la transmission sur le rapport courant.

Sur la figure 2 (cas d'une demande de neutre accidentel ou volontaire refusé par le contrôle), les mêmes repères ont été conservés, mais cette fois, le pic d'accélération transversal dépasse le seuil d'accélération calibré, et le rapport engagé est maintenu. La transmission ne passe pas au neutre, en dépit du déplacement du levier. En effet, compte tenu du niveau d'accélération transversale, le déplacement du sélecteur est effectué dans un contexte dangereux, de sorte que le rapport engagé est maintenu, et que la transmission ne s'ouvre pas.

L'accélération transversale, peut être fournie à l'unité de calcul de la transmission, soit directement par un accéléromètre, soit par mesure sur le différentiel de la transmission, en corrélation avec la vitesse moyenne du châssis. Elle peut aussi être calculée de manière « prédictive » par exemple grâce aux données GPS, ou à d'autres moyens de mesures à distance. En effet, si le véhicule est doté d'un système « GPS », les informations relatives au positionnement du véhicule sur la carte, à ses conditions de déplacement ou à son itinéraire, sont exploitables afin d'évaluer en temps réel, ou de manière prédictive, le contexte sécuritaire dans lequel il évolue. En estimant l'accélération moyenne à laquelle le véhicule sera soumis dans les courbes à négocier à court terme, il devient possible de « prédire » l'accélération transversale du véhicule sur son itinéraire pour interdire l'ouverture de la transmission à l'entrée de zones dentifiées à risque sur un itinéraire programmé. Les zones à risque sont identifiables en fonction des rayons moyens des courbes présentes sur l'itinéraire du véhicule. L'interdiction d'ouverture de la transmission sur une zone à risques dépend d'une estimation de l'accélération transversale à laquelle le véhicule sera soumis sur les courbes de cette zone. Dès lors, il n'est pas nécessaire que le véhicule subisse l'accélération transversale maximale autorisée, pour interdire l'ouverture de transmission.

Une façon pratique d'estimer l'accélération transversale sur les zones à risques repose sur la vitesse moyenne du véhicule et des gradients de freinage identifiés dans des conditions de roulage analogues. Dans le cas d'une telle interdiction « prédictive » sur une zone à risque, l'interdiction d'ouverture de la transmission est suspendue en sortie de cette zone, ou si l'accélération transversale repasse sous le seuil calibré.

Que l'accélération transversale prise en compte soit « prédictive » ou « réelle », l'invention prévoit d'introduire un terme correctif, tel qu'un coefficient d'adhérence dans la logique de commande, en rapport avec la motricité du véhicule. Ce terme reflète l'adhérence au sol du véhicule, en fonction de la nature du revêtement au sol et des pneumatiques. Un des objectifs de ce terme correctif, est d'interdire l'ouverture de la transmission en virage verglacé, même à très faible vitesse. Il est pris en compte afin d'optimiser le niveau d'accélération transversale au-delà duquel la stratégie peut être activée. Pour une route enneigée, la stratégie s'activera par exemple avec un niveau d'accélération transversale moindre que sur route sèche.

L'adhérence dépend à la fois de l'état du pneumatique, du type de voie empruntée et des conditions météorologique. Il existe différents modes d'appréciation de l'adhérence du véhicule, dont des données mémorisées sur l'historique de la motricité du véhicule depuis la mise en route, calculés par exemple par des systèmes de contrôle de trajectoire ou de contrôle de freinage. Les estimations du pouvoir de motricité peuvent aussi être basées sur la différence de vitesse entre la moyenne des roues motrices et la moyenne des roues non motrices, pour en affecter une valeur, ou « grade », au coefficient d'adhérence, appliqué au seuil d'accélération calibré. Le seuil d'accélération transversale calibré est multiplié par le coefficient d'adhérence pour obtenir le seuil final : *Seuil*_*final*_*accel*_*transversal*=*(coef*_*adhérence)***(seuil*_*accel*_*t ransversal calibré).*

En conclusion, l'invention concerne des situations où le déplacement du levier sur la position neutre est possible physiquement, mais peut s'avérer dangereuse. Elle introduit un arbitrage qui donne lieu, ou non, à l'exécution de la consigne de demande d'ouverture de transmission. En cas d'interdiction, la transmission est bloquée sur son rapport courant pendant toute la durée de l'interdiction. Enfin, une alerte visuelle ou sonore peut être émise pour informer le conducteur du déclenchement de l'interdiction.

## Revendications

1. Procédé de contrôle d'une transmission automatique de véhicule en situation de virage, **caractérisé en ce que** l'ouverture de la transmission en réponse au déplacement d'une interface de commande dont les informations de position sont transmises à l'unité de calcul de la transmission par un réseau de communication du véhicule, est contrôlée sur la base d'une comparaison d'une valeur d'accélération transversale mesurée ou prédite du véhicule avec un seuil d'accélération transversale calibré en fonction du rayon de courbure des virages abordés ou identifiés et de la vitesse et de l'accélération longitudinale du véhicule sur ces derniers.

2. Procédé de contrôle d'une transmission automatique selon la revendication 1, **caractérisé en ce que** l'ouverture de la transmission est interdite lorsque l'accélération transversale mesurée du véhicule est supérieure au seuil calibré.

3. Procédé de contrôle d'une transmission automatique selon la revendication 2, **caractérisé en ce que** l'ouverture de la transmission est interdite à l'entrée du véhicule sur des zones à risques identifiées sur son itinéraire.

4. Procédé de contrôle selon la revendication 2, **caractérisé en ce que** les zones à risques sont identifiées en fonction des rayons moyens des courbes présentes sur l'itinéraire.

5. Procédé de contrôle selon la revendication 4, **caractérisé en ce que** l'interdiction d'ouverture de la transmission sur les zones à risques dépend de d'une estimation de l'accélération transversale à laquelle le véhicule sera soumis sur les courbes de cette zone.

6. Procédé de contrôle selon la revendication 5, **caractérisé en ce que** l'accélération transversale sur les zones à risques est estimée en fonction de la vitesse moyenne du véhicule et de gradients de freinage identifiés dans des conditions de roulage analogues.

7. Procédé de contrôle d'une transmission automatique selon l'une des revendications 3 à 6, **caractérisé en ce que** l'interdiction d'ouverture de la transmission est suspendue en sortie d'une zone à risque, ou si l'accélération transversale repasse sous le seuil calibré.

8. Procédé de contrôle d'une transmission automatique selon l'une des revendications précédentes, **caractérisé en ce que** le contrôle intervient lorsqu'un sélecteur de vitesses de la transmission est déplacé d'une position de rapport engagé, ou Drive, vers une position neutre ou de point mort.

9. Procédé de contrôle selon la revendication 9, **caractérisé en ce que** la transmission est bloquée sur son rapport courant pendant l'interdiction d'ouverture de la transmission.

10. Procédé de contrôle selon l'une des revendications précédentes, **caractérisé en ce que** le seuil d'accélération transversale calibré est multiplié par un coefficient d'adhérence.

## Patentansprüche

1. Verfahren zur Steuerung eines Fahrzeugautomatikgetriebes bei Kurvenfahrt, **dadurch gekennzeichnet, dass** das Öffnen des Getriebes als Antwort auf das Bewegen einer Schaltschnittstelle, deren Stellungsinformationen über ein Kommunikationsnetz des Fahrzeugs an die Recheneinheit des Getriebes übertragen werden, auf der Grundlage eines Vergleichs eines gemessenen oder vorhergesagten Querbeschleunigungswerts des Fahrzeugs mit einem Querbeschleunigungsschwellenwert, der in Abhängigkeit vom Krümmungsradius der befahrenen oder ermittelten Kurven und von der Geschwindigkeit und der Längsbeschleunigung des Fahrzeugs auf diese Letzteren kalibriert wird, gesteuert wird.

2. Verfahren zur Steuerung eines Automatikgetriebes nach Anspruch 1, **dadurch gekennzeichnet, dass** das Öffnen des Getriebes gesperrt wird, wenn die gemessene Querbeschleunigung des Fahrzeugs größer als der kalibrierte Schwellenwert ist.

3. Verfahren zur Steuerung eines Automatikgetriebes nach Anspruch 2, **dadurch gekennzeichnet, dass** das Öffnen des Getriebes beim Einfahren des Fahrzeugs in auf seinem Weg ermittelte Risikobereiche gesperrt wird.

4. Steuerungsverfahren nach Anspruch 2, **dadurch gekennzeichnet, dass** die Risikobereiche in Abhängigkeit von den mittleren Radien der auf dem Weg vorhandenen Kurven ermittelt werden.

5. Steuerungsverfahren nach Anspruch 4, **dadurch gekennzeichnet, dass** das Sperren des Öffnens des Getriebes in den Risikobereichen von einer Schätzung der Querbeschleunigung abhängt, der das Fahrzeug in den Kurven dieses Bereichs unterworfen ist.

6. Steuerungsverfahren nach Anspruch 5, **dadurch gekennzeichnet, dass** die Querbeschleunigung in den Risikobereichen in Abhängigkeit von der mittleren Geschwindigkeit des Fahrzeugs und von unter ähnlichen Fahrbedingungen ermittelten Bremsgradienten geschätzt wird.

7. Verfahren zur Steuerung eines Automatikgetriebes nach einem der Ansprüche 3 bis 6, **dadurch gekennzeichnet, dass** das Sperren des Öffnens des Getriebes beim Verlassen eines Risikobereichs aufgehoben wird oder wenn die Querbeschleunigung wieder unter den kalibrierten Schwellenwert sinkt.

8. Verfahren zur Steuerung eines Automatikgetriebes nach einem der vorhergehenden Ansprüche, **dadurch gekennzeichnet, dass** die Steuerung eingreift, wenn ein Gangwähler des Getriebes aus einer Stellung für einen eingelegten Gang oder Drive in eine neutrale Stellung oder Totpunktstellung bewegt wird.

9. Steuerungsverfahren nach Anspruch 9, **dadurch gekennzeichnet, dass** das Getriebe während des Sperrens des Öffnens des Getriebes auf seinen aktuellen Gang blockiert ist.

10. Steuerungsverfahren nach einem der vorhergehenden Ansprüche, **dadurch gekennzeichnet, dass** der kalibrierte Querbeschleunigungsschwellenwert mit einem Haftreibungskoeffizienten multipliziert wird.

## Claims

1. Method for controlling an automatic transmission of a vehicle during cornering, **characterized in that** opening of the transmission in response to the movement of a control interface, the position data of which are transmitted to the calculation unit of the transmission by a communication network of the vehicle, is controlled on the basis of a comparison of a measured or predicted transverse acceleration value of the vehicle with a transverse acceleration threshold calibrated as the radius of curvature of the encountered or identified corners and the speed and the longitudinal acceleration of the vehicle on these corners.

2. Method for controlling an automatic transmission according to Claim 1, **characterized in that** opening of the transmission is prevented when the measured transverse acceleration of the vehicle is greater than the calibrated threshold.

3. Method for controlling an automatic transmission according to Claim 2, **characterized in that** opening of the transmission is prevented when the vehicle enters hazardous regions identified on its route.

4. Control method according to Claim 2, **characterized in that** the hazardous regions are identified as a function of the average radii of the bends present on the route.

5. Control method according to Claim 4, **characterized in that** the prevention of the opening of transmission in the hazardous regions depends on an estimate of the transverse acceleration to which the vehicle will be submitted on the bends of this region.

6. Control method according to Claim 5, **characterized in that** the transverse acceleration in the hazardous regions is estimated as a function of the average speed of the vehicle and the braking gradients identified under similar driving conditions.

7. Method for controlling an automatic transmission according to one of Claims 3 to 6, **characterized in that** the prevention of opening of the transmission is suspended when leaving a hazardous region, or if the transverse acceleration returns below the calibrated threshold.

8. Method for controlling an automatic transmission according to one of the preceding claims, **characterized in that** the control intervenes when a gear selector of the transmission is moved from an engaged ratio position, or drive position, to a neutral or dead point position.

9. Control method according to Claim 9, **characterized in that** the transmission is locked on its current ratio during the transmission opening prevention.

10. Control method according to one of the preceding claims, **characterized in that** the calibrated transverse acceleration threshold is multiplied by a grip coefficient.
